# FASCICULE DE BREVET EUROPEEN

(11) **EP 3 870 323 B1**
(45) Date de publication et mention de la délivrance du brevet: **08.10.2025**
(21) Numéro de dépôt: 19789715.0
(22) Date de dépôt: 24.10.2019
(51) Int. Cl.: A63F 13/24, A63F 13/22

(54) **MANETTE DE JEU COMPORTANT AU MOINS UN ELEMENT DE REGLAGE AMOVIBLE PERMETTANT LE REGLAGE DE L'ANGLE D'ARRET D'UN ORGANE DE COMMANDE PIVOTANT DE LA MANETTE**
SPIELE-CONTROLLER MIT MINDESTENS EINEM ABNEHMBAREN VERSTELLELEMENT ZUR ANPASSUNG DES ANSCHLAGWINKELS EINES SCHWENKBAREN STEUERELEMENTS DES CONTROLLERS
GAME CONTROLLER COMPRISING AT LEAST ONE REMOVABLE ADJUSTING ELEMENT ALLOWING ADJUSTMENT OF THE STOP ANGLE OF A PIVOTING CONTROL MEMBER OF THE CONTROLLER

(30) Priorité: 25.10.2018 FR 1859850
(43) Date de publication de la demande: 01.09.2021
(73) Titulaire: NACON, 59273 Fretin (FR)
(72) Inventeur: FALC, Alain, 59273 Fretin (FR); VANDEKERCKHOVE, Antoine, 59273 Fretin (FR); DELRUE, Valentin, 59273 Fretin (FR); ALLAERT, Yannick, 59273 Fretin (FR)
(74) Mandataire: Matkowska, Franck
(86) Numéro de dépôt international: PCT/EP2019/079006
(87) Numéro de publication internationale: WO 2020/084041

(56) Documents cités:
- WO-A1-2016/191009
- WO-A1-2018/093328
- FR-A1- 2 720 009
- FR-A1- 2 826 589
- FR-A1- 2 826 589
- FR-A1- 2 849 612
- US-A1- 2016 287 986
- US-A1- 2017 368 451

## Description

### Domaine technique

La présente invention concerne le domaine des manettes de jeu comportant au moins un organe de commande pivotant, de type « stick » pivotant, notamment « joystick » ou « thumbstick », inclinable dans toutes les directions. Dans ce domaine, elle concerne un perfectionnement permettant à un utilisateur de la manette de jeu de modifier facilement la réactivité de l'organe de commande pivotant pour mieux adapter la manette au type de jeu piloté par la manette.

### Art antérieur

Il est aujourd'hui courant de commander un jeu vidéo au moyen d'une manette de jeu comportant au moins un organe de commande pivotant, de type « stick » pivotant analogique, notamment « joystick » ou « thumbstick », inclinable dans toutes les directions.

De manière usuelle, l'organe de commande pivotant comporte une position de repos centrale, dans laquelle il est rappelé élastiquement en rotation, et est couplé à des capteurs de déplacement mesurant la rotation de cet organe, par rapport à cette position de repos, autour de deux axes perpendiculaires. Les signaux de mesure analogiques délivrés par ces capteurs de déplacement sont traités automatiquement par un logiciel embarqué dans la manette de jeu, de telle sorte que l'actionnement manuel de cet organe de commande pivotant par le joueur permet d'interagir avec un jeu vidéo, par exemple pour déplacer un personnage ou un objet dans un jeu vidéo.

Plus particulièrement, pour commander des jeux vidéo, il est aujourd'hui usuel d'utiliser une manette de jeu comportant deux organes pivotants, généralement désignés « joysticks» et parfois également désignés « thumbsticks », qui sont actionnables indépendamment l'un de l'autre, au moyen respectivement des pouces droit et gauche d'un joueur tenant la manette.

Ce type de manette de jeu est décrit par exemple dans les publications suivantes : demandes de brevet internationales WO2016/200548, WO2016/200615, WO2016/210586 ; brevets américains US 9 971 420, US 9 710 072, US 9 868 058.

En pratique, une telle manette de jeu comporte une coque assemblée, généralement sous la forme d'au moins deux demi-coques assemblées entre-elle par tout moyen, par exemple au moyen de vis et/ou par collage et/ou par soudure. Cette coque est généralement ergonomique de manière à faciliter la prise en main(s) de la manette par un joueur.

Les moyens électroniques de commande de la manette sont logés à l'intérieur de ladite coque assemblée. Ces moyens électroniques de commande comportent notamment :
- les capteurs de déplacement susvisés, une ou plusieurs mémoires électroniques,
- un processeur qui est apte à exécuter automatiquement un logiciel embarqué, et qui peut être implémenté par exemple au moyen d'un microprocesseur, d'un microcontrôleur, d'un circuit électronique programmable de type FPGA ou d'un circuit 'électronique spécifique de type ASIC,
- la connectique permettant de faire communiquer le processeur avec une console de jeu ou équivalent.

Pour chaque organe de commande pivotant de type «joystick », la coque de la manette de jeu comporte une ouverture à travers laquelle est passé l'organe de commande pivotant.

Plus particulièrement chaque organe pivotant comporte un élément de base pivotant qui est passé à travers une ouverture de la coque, dont l'extrémité inférieure est logée à l'intérieur de la coque assemblée et est couplée aux capteurs de déplacement, et une tête ergonomique pour la manipulation de l'organe de commande pivotant, et par exemple une tête dont la surface supérieure peut être bombée de forme concave ou convexe ou peut être plane.

A l'origine, la tête et l'élément de base pivotant était conçus de manière à former un ensemble monolithique fait d'une seule pièce ou de plusieurs pièces assemblées entre elles de manière définitive.

Plus récemment, afin de permettre notamment à un joueur de choisir la tête d'organe de commande qui lui convient le mieux, les fabricants de manettes de jeu ont proposé des manettes de jeux avec plusieurs têtes d'organe de commande pivotant, de type « joystick », facilement interchangeables. On peut à ce sujet se référer aux publications susvisées WO2016/200548 et WO2016/200615, qui décrivent des solutions d'organes de commande pivotants de type « joystick » pour manette de jeu dont la tête peut être montée de manière amovible sur l'élément de base pivotant, les moyens d'assemblage de la tête et de l'élément de base pivotant pouvant être de type mécanique uniquement ou au moins en partie de type magnétique.

On a également proposé dans la demande de brevet français FR 2 826 589 A1 un dispositif permettant d'améliorer la progressivité des joysticks analogiques des manettes de consoles de jeu ou d'ordinateur, permettant ainsi une meilleure interface homme/machine. Ce dispositif comporte corps, qui est constitué de matière compressible et élastique et qui présente un orifice central permettant de l'enfiler sur le joystick par élasticité.

On a également proposé dans la demande de brevet américain US2016/0287986 A1 une manette de jeu dont l'organe de commande est pourvu d'un roulement interne adapté pour venir en contact avec une surface interne à l'intérieur de la coque de la manette.

Dans les manettes de jeu connues à ce jour, l'organe de commande pivotant de type « joystick » est inclinable en rotation manuellement, depuis sa position de repos, et dans toutes les directions jusqu'à une position extrême, dite par la suite « position d'arrêt », dans laquelle l'organe de commande pivotant est en butée et son inclinaison est bloquée. Cette position d'arrêt pour chaque direction d'inclinaison de l'organe de commande pivotant permet de définir un angle d'arrêt de l'organe de commande pivotant par rapport à sa position de repos. Lorsque l'utilisateur relâche l'organe de commande pivotant, celui-ci est rappelé élastiquement en rotation vers sa position de repos, par des moyens mécaniques de rappel adaptés de type ressort(s) de rappel.

Généralement, la position de repos de l'organe de commande pivotant est une position centrale et la valeur de l'angle d'arrêt de l'organe de commande pivotant est la même sur 360° pour toutes les directions d'inclinaison de l'organe de commande et est de l'ordre de 38°. Il est néanmoins concevable de réaliser un organe de commande pivotant pour manette de jeu ayant au moins deux valeurs d'angle différentes pour différentes directions d'inclinaison.

Selon le type de manette de jeu, la position d'arrêt de l'organe de commande pivotant peut être obtenue de différentes manières.

Dans un premier type connu de manette de jeu, cette position d'arrêt est obtenue en utilisant comme butée basse en rotation le bord périphérique de l'ouverture à travers laquelle est passé l'organe de commande pivotant ou le bord intérieur d'un anneau rapporté fixé au niveau de cette ouverture et entourant l'organe de commande pivotant.

Dans un deuxième type connu de manette de jeu, décrit notamment dans les publications WO2016/200548 et WO2016/200615, cette position d'arrêt est obtenue au moyen d'une pièce en forme de dôme, qui est fixée sur l'organe de commande pivotant en étant logée à l'intérieur de la coque de la manette de jeu, et qui est adaptée pour venir en butée avec une partie interne à la coque de la manette à fonction de butée haute. Cette butée haute est constituée par exemple d'une partie interne de la coque à proximité de l'ouverture à travers laquelle est passé l'organe de commande pivotant ou par une partie interne à la coque d'un anneau rapporté fixé au niveau de cette ouverture et entourant l'organe de commande pivotant.

Avec certains jeux vidéo, et par exemple avec des jeux de combats, il est souhaitable pour le joueur de pouvoir être le plus réactif possible et à cet effet d'avoir une manette de jeu plus réactive lui permettant d'amener le plus rapidement possible l'organe de commande pivotant en position d'arrêt dans une direction inclinaison. Avec d'autres types de jeu vidéo, la vitesse pour amener l'organe de commande pivotant en position d'arrêt est moins cruciale et la manette de jeu utilisée peut ainsi être moins réactive.

### Objectif de l'invention

L'invention a ainsi pour objectif principal de proposer une nouvelle solution technique qui permet à un joueur de modifier facilement et rapidement la réactivité d'une manette de jeu, en particulier pour l'adapter à différents types de jeux vidéo.

Un objectif plus particulier de l'invention est de proposer une nouvelle solution technique qui permet à un joueur d'augmenter facilement et rapidement la réactivité d'une manette de jeu, en particulier pour la rendre plus adaptée à une utilisation avec des jeux vidéo de combats.

### Résumé de l'invention

L'invention a ainsi pour objet un ensemble comportant une manette de jeu et au moins deux éléments de réglage différents, tel que défini dans la revendication 1.

Plus particulièrement, l'ensemble de l'invention peut comporter les caractéristiques additionnelles et optionnelles suivantes, prises isolément, ou en combinaison les unes avec les autres et définies dans les revendications 2 à 15.

L'invention a également pour autre objet un ensemble comportant au moins deux éléments de réglage différents tel que défini dans la revendication 15.

Plus particulièrement, ledit ensemble peut comporter les caractéristiques additionnelles et optionnelles suivantes, prises isolément, ou en combinaison les unes avec les autres et définies dans les revendications 16 et 17.

L'invention a également pour autre objet un procédé de réglage de l'angle d'arrêt de l'organe de commande pivotant d'une manette de jeu d'un ensemble susvisé, tel que défini dans la revendication 16.

### Brève description des dessins

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- la figure 1 est une vue en perspective isométrique d'une variante de réalisation d'une manette de jeu conforme à l'invention ;
- la figure 2 est une vue éclatée d'un exemple de réalisation d'un organe de commande pivotant et d'une bague de réglage fine adaptable de manière amovible sur cet organe de commande pivotant ;
- la figure 3 est une vue en coupe transversale de l'organe de commande pivotant de la figure 2, une fois assemblé et monté à travers l'ouverture d'un insert cylindrique fixé à travers la coque de la manette de jeu, l'organe de commande pivotant étant pourvu de la bague de réglage fine et amovible de figure 2, la coque de la manette de jeu n'étant pas représentée sur cette figure 3, l'élément de base pivotant inférieur de l'organe de commande pivotant de la figure 2 n'étant pas représenté sur cette figure 3, et l'organe de commande pivotant étant dans sa position de repos ;
- la figure 4 est une vue en coupe transversale montrant l'organe de commande pivotant de la figure 3, qui est pourvu de la bague de réglage fine, et qui est incliné en position d'arrêt ;
- la figure 5 est une vue en coupe transversale montrant l'organe de commande pivotant de la figure 3 qui est pourvu d'une bague de réglage épaisse et qui est incliné en position d'arrêt ;
- la figure 6A est une vue de dessus de la bague de réglage fine des figures 3 et 4 ;
- la figure 6B une vue de dessus d'une bague de réglage ayant une épaisseur intermédiaire entre l'épaisseur de la bague fine de la figure 6A et celle de la bague épaisse de la figure 6C ;
- la figure 6C est une vue de dessus de la bague de réglage épaisse de la figure 5.

### Description détaillée

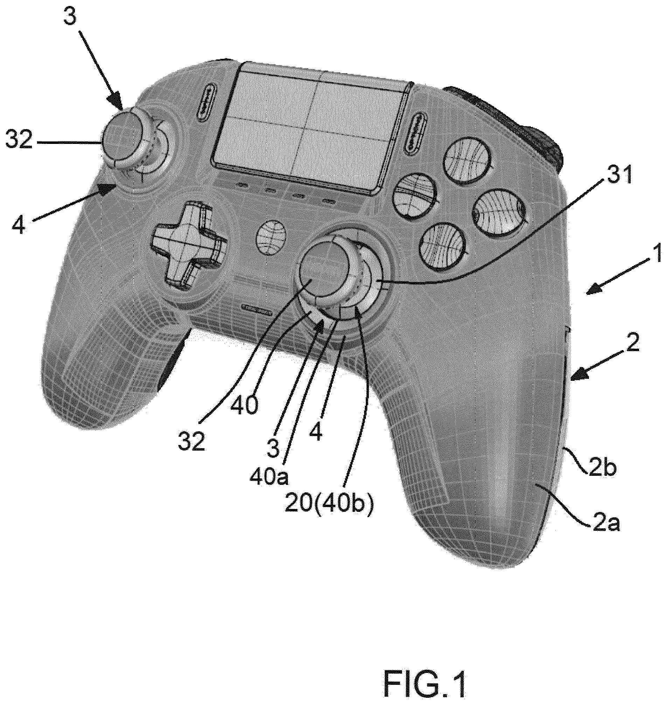

On a présenté sur la figure 1, un exemple particulier de manette de jeu 1 comportant une coque 2 assemblée, et des moyens de commande comprenant notamment deux organes de commande 3 pivotants : un organe pivotant 3 localisé dans la partie gauche de la manette de jeu 1 et un organe pivotant 3 localisé dans la partie droite de la manette de jeu 1.

La coque 2 assemblée comprend, de manière connue en soi, une demi-coque supérieure 2a, qui est assemblée par tout moyen, par exemple mécaniquement au moyen de vis ou équivalent et/ou par collage et/ou par soudure, avec une demi-coque inférieure 2b.

Dans cet exemple particulier, la coque 2 assemblée présente plus particulièrement une forme ergonomique adaptée pour faciliter sa prise à deux mains par un joueur.

Chaque organe pivotant 3 est passé à travers une ouverture 20 de la demi-coque supérieure 2a, plus particulièrement une ouverture 20 circulaire.

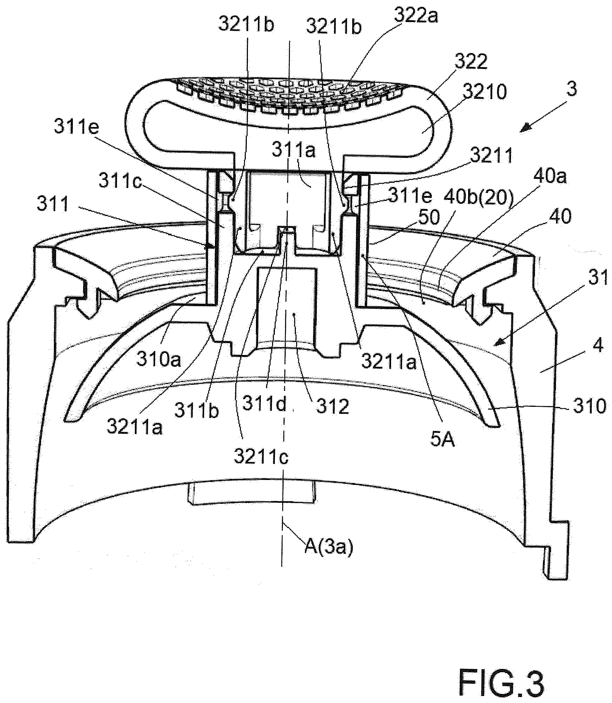

Plus particulièrement dans cet exemple particulier de réalisation, en référence aux figures 1 et 3, et de manière non limitative de l'invention, au niveau de chaque ouverture 20 circulaire de la demi-coque supérieure 2a, la manette de jeu 1 comporte un insert tubulaire 4, de forme cylindrique, qui est monté dans une ouverture 20 de la demi-coque supérieure 2a de la manette 2, et est fixé à la demi-coque supérieure 2a. La partie supérieure de cet insert 4 est pourvue d'un anneau 40 dont le bord intérieur 40a délimite une ouverture circulaire 40b (figure 3) de plus petit diamètre que le diamètre de l'ouverture 20 de la coque 2. Lorsque cet insert tubulaire 4 est monté et est fixé dans une ouverture 20 circulaire de la demi-coque supérieure 2a de la manette de jeu 1, l'ouverture circulaire 40b de cet insert tubulaire 4 est centrée par rapport à cette ouverture 20.

Dans une autre variante de réalisation, la manette de jeu peut ne pas comporter un tel insert tubulaire 4, et/ou peut ne pas comporter d'anneau 40. En l'absence d'anneau 40, le bord intérieur 40a susvisé est remplacé par le bord intérieur de l'ouverture 20 dans la demi-coque supérieure 2a de la manette de jeu. Dans une autre variante de réalisation, l'anneau 40 peut faire partie intégrante de la demi-coque supérieure 2a ou être une pièce rapportée, qui peut est fixée de manière définitive ou amovible à l'insert tubulaire 4 ou directement au niveau de l'ouverture 20 de la demi-coque supérieure 2a.

Dans l'exemple particulier de réalisation de la figure 1, chaque organe pivotant 3 est de type «joystick», et est positionné à proximité du bord de la coque 2, de manière à pouvoir être facilement manipulé par le pouce gauche ou le pouce droit d'un joueur tenant la manette de jeu.

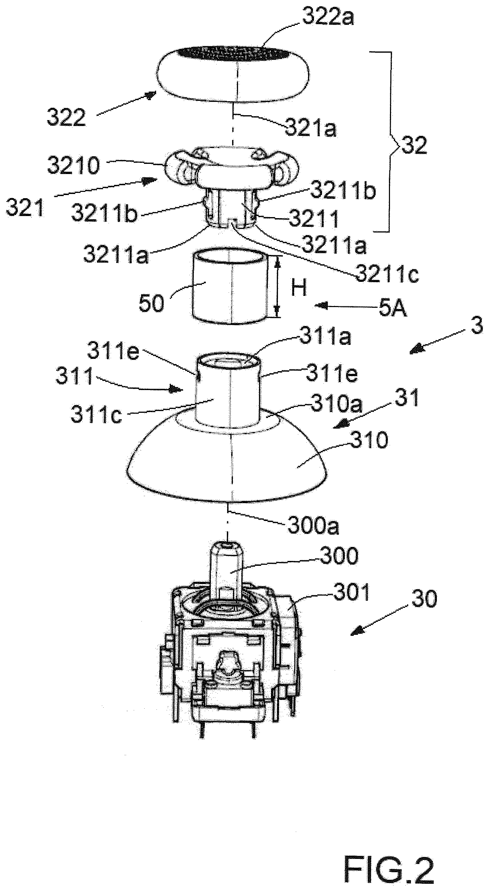

Chaque organe de commande pivotant 3 de la manette de jeu 1 est constitué par un assemblage monolithique de plusieurs éléments 30, 31, 32, qui vont à présent être décrits en référence aux figures 2 et 3, et est en outre pourvu d'une bague de réglage 5A cylindrique et amovible.

### Organe de commande pivotant 3

L'élément 30 (figure 2) de chaque organe de commande pivotant 3 est un élément base qui est destiné à être monté et fixé de manière définitive par rapport à la coque 2 de la manette de jeu. Cet élément de base 30 de chaque organe de commande pivotant 3 est connu et sera donc décrit succinctement ci-après.

En référence à la figure 2, cet élément de base 30 comporte un arbre (« stick ») cylindrique 300, d'axe central 300a, qui est monté pivotant par rapport à un boîtier 301. Cet arbre cylindrique 300 pivotant est apte à être incliné manuellement par rapport au boîtier 301, dans toutes les directions, depuis une position de repos centrale, illustrée sur les figures 1 et 2, dans laquelle il est rappelé élastiquement en rotation. Les moyens de rappel élastique en rotation dans la position de repos centrale de cet arbre 300 sont connus et ne seront donc pas détaillés. Ces moyens de rappel élastique, de type ressorts, sont logés à l'intérieur du boîtier 301.

Cet arbre pivotant 300 est par ailleurs, et de manière usuelle, couplé à des capteurs de déplacement analogiques, par exemple des capteurs de type potentiomètres, qui sont logés à l'intérieur du boîtier 301, et qui permettent de mesurer les angles de rotation de cet arbre 300, respectivement autour de deux axes de rotation de référence, qui sont perpendiculaires entre eux et qui définissent un plan perpendiculaire à l'axe central 300a de l'arbre 300 dans sa position de repos de la figure 2. De manière connue, ces capteurs délivrent des signaux de mesure analogiques caractéristiques de la valeur instantanée de l'angle formé par l'axe central 300a de l'arbre 300, autour de chaque axe de rotation de référence, par rapport à la position de repos de cet axe 300a.

L'élément de base 30 est monté et fixé à l'intérieur de la coque 2 de la manette de jeu 1, de telle sorte que d'une part son boîtier 301 est intégralement logé à l'intérieur de la coque assemblée 2 et est fixé à la coque assemblée 2, et d'autre part que son arbre 300 pivotant est positionné perpendiculairement à l'ouverture circulaire 40b de l'insert tubulaire 4 précédemment décrit et est centré par rapport à cette ouverture circulaire 40b.

L'élément 31 de chaque organe de commande pivotant 3 est une pièce de protection qui est symétrique et rigide, et qui comporte :
- en partie inférieure une coupole 310 en forme de dôme
   et
- en partie supérieure un embout d'assemblage cylindrique 311, qui est centré par rapport à la coupole inférieure 310, l'axe de symétrie central de la coupole 310 étant confondu avec l'axe de symétrie central de cet embout cylindrique 311.

Plus particulièrement, l'embout d'assemblage cylindrique 311 comporte une cavité 311a (figures 2 et 3) qui est ouverte en partie supérieure et qui est délimitée par une paroi de fond 311b et une paroi latérale 311c, de préférence cylindrique. La paroi de fond comporte (figure 3) un ergot central 311d en saillie. La paroi latérale 311c comporte des lumières d'assemblage 311e de préférence diamétralement opposées.

En référence à la figure 3, l'élément de protection 31 comporte en outre dans sa partie inférieure un logement cylindrique 312 central. Ce logement cylindrique 312 central est dimensionné de manière à permettre un emboîtement serré dans ce logement 312 de l'arbre pivotant 300 de l'élément de base 30. La section transversale de ce logement cylindrique 312 et la section transversale de l'arbre pivotant 300 ne sont pas circulaires et sont choisies de manière à permettre un blocage en rotation dans ce logement 312 de l'arbre pivotant 300 autour de son axe central. Le montage de l'élément 31 est effectué simplement en emboîtant axialement l'élément 31 sur l'arbre pivotant 300 de l'élément de base 30.

La coupole 310 de l'élément 31 de protection est dimensionnée de telle sorte que son diamètre extérieur maximum est supérieur au diamètre de l'ouverture 40b de l'insert tubulaire 4. La coupole de l'élément 31 permet d'obturer partiellement l'ouverture 40b de l'insert tubulaire 4, sans faire obstacle au pivotement de l'arbre 300 de l'élément de base 30, ce qui permet notamment d'éviter l'introduction accidentelle de corps ou éléments étrangers à l'intérieur de la coque 2 assemblée et permet également d'améliorer l'aspect esthétique de la manette de jeu 1.

L'élément 32 constitue la tête de l'organe de commande pivotant 3 et une fois monté se trouve positionné (figure 1) à l'extérieur de la coque assemblée. Cette tête 32 présente une géométrie et des dimensions adaptées pour la manipulation par un joueur de l'organe de commande pivotant 3, au moyen de préférence de l'un de ses deux pouces.

Plus particulièrement, cette tête 32 est amovible de manière à pouvoir être facilement et rapidement montée ou retirée par un utilisateur, notamment sans devoir désassembler la coque 2 de la manette de jeu 1.

Dans cet exemple particulier, cette tête 32 est constituée de sous-éléments 321, 322.

Le sous-élément 321 est une pièce monobloc symétrique présentant un axe central de symétrie 321a, et est par exemple une pièce injectée en plastique. Elle comporte une partie supérieure 3210 sensiblement en forme de disque et une partie inférieure 3211 cylindrique, qui est orientée perpendiculairement à ladite partie supérieure 3210 en forme de disque, et qui est centrée par rapport à ladite partie supérieure 3210 en forme de disque.

Le sous-élément 322 est en forme de disque, et est prévu pour être en contact avec le pouce du joueur. Le sous-élément 322 est généralement surmoulé sur la partie supérieure 3210 en forme de disque du sous-élément 321 ou peut être fixé par tout moyen, de manière définitive et robuste, à la partie supérieure 3210 en forme de disque du sous-élément 321.

Ce sous-élément 322 peut par exemple être en caoutchouc pour améliorer l'adhérence avec le pouce de l'utilisateur.

La face supérieure 322a du sous-élément 322 peut par exemple être courbe et concave tel qu'illustré sur la figure 3. Dans une autre variante, la face supérieure 322a du sous-élément 322 peut par exemple être bombée et convexe ou peut être plane.

La partie inférieure 3211 cylindrique du sous-élément 321 de la tête 32 est déformable de manière élastique pour permettre son emboîtement élastique dans l'embout d'assemblage cylindrique 311 de l'élément de protection 31.

Plus particulièrement, dans la variante particulière de réalisation des figures 2 et 3, la partie inférieure 3211 cylindrique de la tête 32 comporte des pattes 3211a diamétralement opposées, qui sont pourvues chacune d'un ergot d'assemblage 3211b externe. Chaque ergot d'assemblage 3211b peut être enfoncé sous l'action d'une contrainte mécanique et peut, en l'absence d'une contrainte mécanique, reprendre élastiquement sa position de repos de la figure 2, dans laquelle il est en saillie vers l'extérieur de la patte 3211a. La partie inférieure 3211 cylindrique de la tête 32 comporte également une fente inférieure 3211c adaptée à la géométrie de l'ergot 311d de la pièce de protection 31.

Pour assembler la tête 32 avec l'élément de protection 31, (figure 3) il suffit d'insérer axialement à la main la partie inférieure 3211 cylindrique de la tête 32 dans la cavité cylindrique 311a de l'embout d'assemblage cylindrique 311 de l'élément de protection 31, jusqu'à ce que l'ergot 311d en saillie dans le fond de la cavité cylindrique 311a pénètre dans la fente 3211c, ce qui permet en final d'obtenir un blocage en rotation de la tête 32 par rapport à l'élément de protection 31. Au cours de cette insertion axiale, on obtient un léger enfoncement de chaque ergot 3211b vers l'intérieur des pattes 3211a jusqu'à ce que chaque ergot 3211b soit positionné en vis-à-vis d'une lumière d'assemblage 311e de l'embout d'assemblage cylindrique 311 et pénètre dans cette lumière d'assemblage 311e (configuration de la figure 3), ce qui permet un blocage axial de la tête 32 par rapport à l'élément de protection 31.

L'élasticité des ergots d'assemblage 3211b permet en outre un serrage radial de la partie inférieure 3211 cylindrique de la tête 32 par rapport à l'embout d'assemblage cylindrique 311. Ce serrage radial est suffisamment fort pour éviter un déboîtement accidentel de la tête 32 par rapport à l'élément de protection 31. En revanche, ce serrage radial est suffisamment faible pour permettre à un utilisateur de déboîter intentionnellement la tête 32 de l'élément de protection 31, en tirant axialement à la main et avec une force suffisante sur la tête 32, de manière à obtenir, sous l'effet de cette traction axiale, un enfoncement des ergots d'assemblage 3211b vers l'intérieur des pattes 3211a qui est suffisant pour faire sortir les ergots 3211b de leurs lumières d'assemblage respectives 311e.

La tête 32 est ainsi facilement et rapidement amovible à la main par un joueur, ce qui permet le cas échéant à un utilisateur de facilement et rapidement mettre en place sur la manette 1 ou de retirer facilement et rapidement de la manette de jeu 1 la bague de réglage amovible 5A sans devoir désassembler la coque 2 de la manette de jeu 1.

### Bague de réglage 5A amovible

Chaque organe de commande pivotant 3 est pourvu d'une bague de réglage 5A cylindrique rigide et amovible, de hauteur H.

Le matériau constitutif de cette bague de réglage 5A est sans importance pour l'invention.

Dans cet exemple particulier, cette bague de réglage 5A comporte une face extérieure 50 formant sur toute la hauteur H de la bague 5A un cylindre droit de section transversale circulaire.

Dans une autre variante de réalisation, la face extérieure 50 de cette bague de réglage 5A pourrait former un cylindre droit de section transversale circulaire uniquement sur une partie de la hauteur H de la bague.

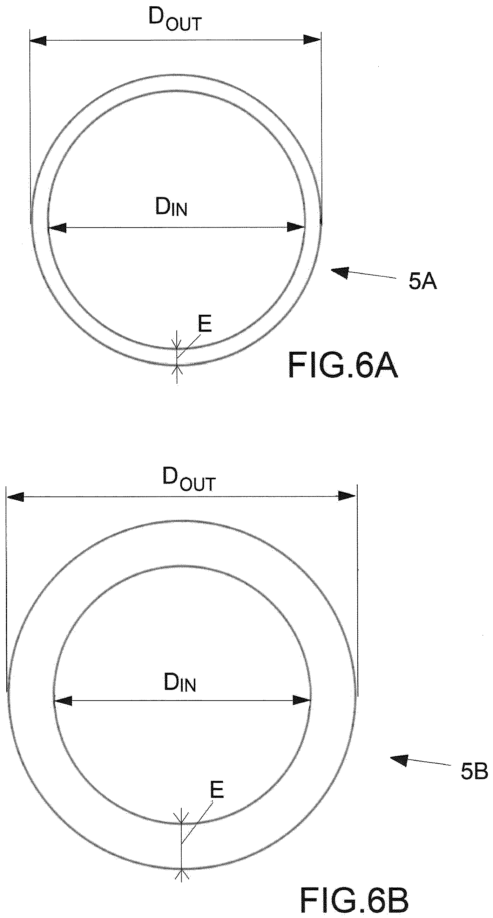

La section intérieure, et notamment le diamètre intérieur Dᵢₙ ( figure 6A) de cette bague 5A est choisi de manière à permettre le montage de cette bague 5A sur l'embout d'assemblage 311 de l'élément 31 avec un jeu minimum juste suffisant pour permettre un coulissement axial guidé de la bague 5A sur l'embout d'assemblage 311 de l'élément 31. La bague de réglage 5A peut donc être enfilée sur l'embout d'assemblage 311 de l'élément de protection 31, de manière amovible, sans être fixée à cet élément de protection 31.

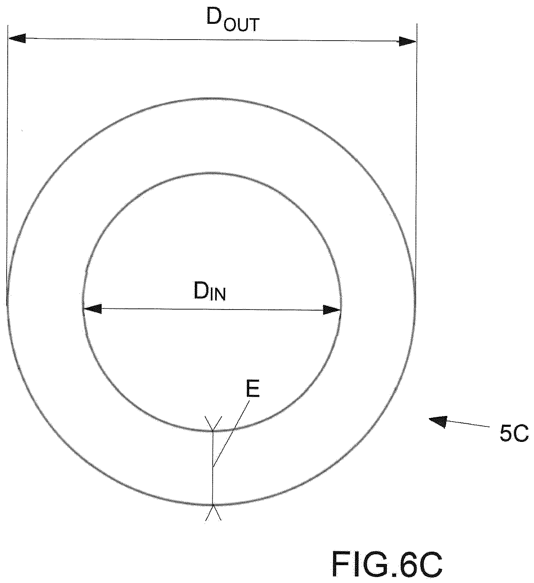

Tel que cela apparaîtra plus clairement ultérieurement, le choix du diamètre extérieur Dₒᵤₜ (Figures 6A, 6B, 6C) de cette bague de réglage cylindrique permet un réglage de l'angle d'arrêt de l'organe pivotant 3.

### Montage et assemblage de l'organe pivotant et de la bague de réglage amovible

Le montage et l'assemblage d'un organe pivotant 3 pourvu d'une bague de réglage amovible est réalisé par exemple en procédant de la manière suivante.

Chaque élément de base 30 assemblé avec l'élément de protection 31 associé est fixé dans l'une des demi-coques supérieure 2a ou inférieure 2b à un emplacement prédéfini et est connecté électriquement à un circuit de commande électronique de la manette de jeu destiné à être logé à l'intérieur de la coque 2.

Ce circuit de commande électronique permet notamment le traitement automatique des signaux de mesure délivrés par les capteurs de déplacement en rotation de l'organe de commande pivotant 3. Ce circuit de commande électronique peut comporter une ou plusieurs mémoires électroniques, un processeur qui est apte à exécuter automatiquement un logiciel embarqué, et qui peut être implémenté par exemple au moyen d'un microprocesseur, d'un microcontrôleur, d'un circuit électronique programmable de type FPGA ou d'un circuit électronique spécifique de type ASIC, et un ou plusieurs connecteurs permettant de faire communiquer le processeur avec une console de jeu ou équivalent.

Ensuite, la demi-coque supérieure 2a pourvue d'un insert tubulaire 4 au niveau de chaque ouverture 20 est positionnée sur la demi-coque inférieure 2b, de telle sorte que l'arbre 300 de chaque organe de commande pivotant 30, dans sa position de repos centrale et portant l'élément de protection 31, est orienté perpendiculairement par rapport à l'ouverture circulaire 40b de l'insert tubulaire 4 et est centré par rapport à cette ouverture circulaire 40b. Enfin, les deux demi-coques 2a, 2b sont assemblées entre elles, par exemple au moyen de vis.

Une fois que les deux demi-coques 2a,2b sont assemblées pour former la coque 2 de la manette de jeu 1, tel qu'illustré sur la figure 3, l'embout d'assemblage cylindrique 311 de l'élément de protection 31, qui est également centré par rapport à l'ouverture circulaire 40b de l'insert tubulaire 4, est de préférence passé à travers l'ouverture 40b de l'insert et ressort à l'extérieur de la coque 2 assemblée, de telle sorte qu'il est au moins en partie situé et facilement accessible à l'extérieur de la coque 2 assemblée.

Les étapes d'assemblage susvisées sont réalisées en usine.

L'utilisateur peut facilement et rapidement configurer la manette de jeu 1 obtenue à l' issue de étapes d'assemblage susvisées, en choisissant une bague de réglage, par exemple la bague de réglage fine 5A, ayant un diamètre extérieur Dₒᵤₜ spécifique qui définit l'angle d'arrêt de l'organe de commande pivotant 3, et en enfilant de manière amovible cette bague de réglage sur l'embout d'assemblage cylindrique 311 de l'élément de protection 31.

Une fois que cette bague de réglage est montée, il suffit à l'utilisateur d'emboîter la tête amovible 32 dans l'embout d'assemblage cylindrique 311 de l'élément de protection 31, tel que précédemment décrit. Une fois la tête 32 emboîtée sur l'élément de protection 31 (figure 3) la bague de réglage est bloquée axialement en position entre la face supérieure 310a de la coupole 310 de l'élément de protection 31 et la tête amovible 32.

### Angle d'arrêt de l'organe de commande pivotant 3

On a référencé A sur la figure 3, l'axe de symétrie central de l'insert tubulaire 4, c'est-à-dire dans cet exemple particulier de réalisation l'axe de symétrie central de l'ouverture circulaire 40b délimitée dans la coque 2 assemblée par l'anneau supérieur 40 de cet insert 4.

Sur cette figure 3, l'organe de commande pivotant 3 pourvu de sa bague de réglage 5A, se trouve dans sa position de repos centrale, son axe de symétrie 3a étant, dans cette position de repos centrale, confondu avec l'axe de symétrie central A de l'ouverture circulaire 40b.

Tel que précédent décrit, l'utilisateur de la manette de jeu 1 peut faire pivoter manuellement cet organe de commande 3, pourvu de sa bague de réglage 5A, dans toutes les directions en l'inclinant par rapport à la position de repos centrale de la figure 3. Lorsque l'utilisateur de la manette de jeu 1 relâche cet organe de commande 3, ce dernier reprend élastiquement sa position de repos centrale de la figure 3.

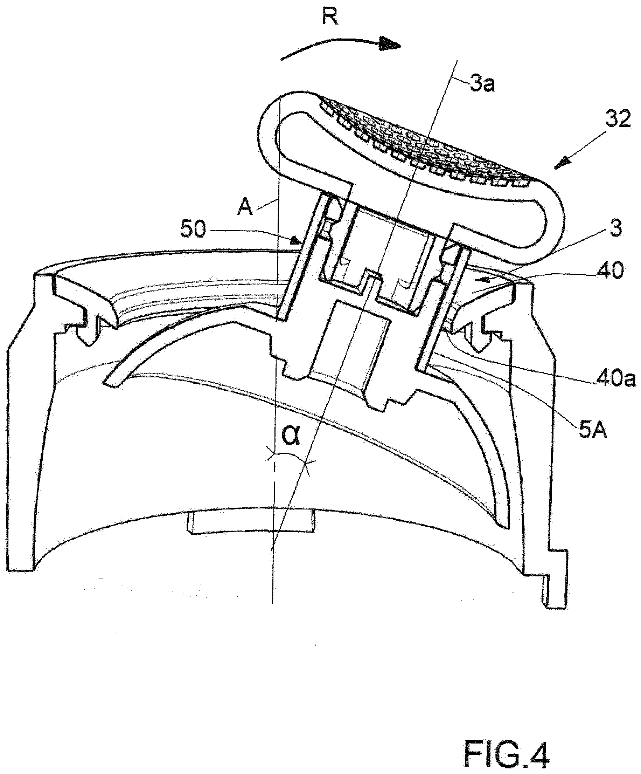

Quelle que soit sa direction d'inclinaison, l'organe de commande 3, pourvu de sa bague de réglage 5A, peut pivoter (figure 4 / rotation R) jusqu'à une position d'arrêt, telle que celle par exemple de la figure 4. Dans cette position d'arrêt, la bague de réglage 5A est en butée et l'inclinaison de l'organe de commande 3 pivotant est ainsi bloquée dans cette position d'arrêt. La bague de réglage 5A permet ainsi de régler la course maximale de l'inclinaison de l'organe de commande pivotant 3.

Dans le cas particulier de la figure 4, le bord intérieur 40a de l'anneau 40 entoure l'organe de commande 3 sur toute sa périphérie. Dans la position d'arrêt de l'organe de commande 3 pourvu de sa bague de réglage 5A, l'organe de commande 3 est en butée contre le bord intérieur 40a l'anneau 40 par l'intermédiaire de ladite bague de réglage 5A, le bord intérieur 40a de l'anneau 40 remplissant une fonction de butée basse en rotation.

La position d'arrêt de l'organe de commande 3 pourvu de sa bague de réglage 5A est caractérisée par un angle d'arrêt α (figure 4), qui correspond à l'angle maximum formé par les deux axes de symétries centraux A et 3a pour une direction d'inclinaison donnée de l'organe de commande 3.

Dans l'exemple de réalisation des figures annexées, mais de manière non limitative de l'invention, la valeur de l'angle d'arrêt α est de préférence la même pour toutes les directions d'inclinaison de l'organe de commande 3 pourvu de sa bague de réglage.

Dans une autre variante de réalisation, la valeur de l'angle d'arrêt α peut être différente pour au moins deux directions d'inclinaison différentes de l'organe de commande 3 pourvu de sa bague de réglage et/ou la géométrie de l'ouverture 40b n'est pas nécessairement circulaire, mais peut par exemple être de type polygonal ou de type elliptique et/ou la position de repos n'est pas nécessairement une position centrale.

Typiquement, la valeur de l'angle d'arrêt de l'organe commande pivotant 3 d'une manette de jeu est inférieur à 90° et généralement comprise entre 20° et 70°.

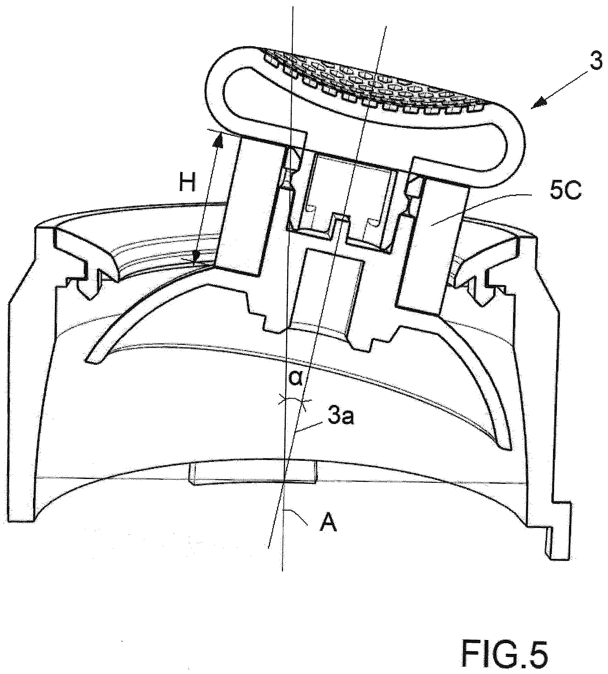

On a représenté sur la figure 5, une variante de réalisation dans laquelle l'organe de commande pivotant 3 est pourvu d'une bague de réglage 5C cylindrique, de même hauteur H que la bague 5A, plus épaisse que la bague 5A fine, et présentant ainsi un diamètre extérieur Dₒᵤₜ ( figure 6C) supérieur à celui de la bague fine 5A. Dans ce cas l'angle d'arrêt α est réglé à une valeur inférieure à celle de l'angle d'arrêt obtenu avec la bague fine 5A.

La valeur de l'angle d'arrêt α dépend ainsi du diamètre extérieur Dₒᵤₜ de la bague de réglage cylindrique utilisé. Plus ce diamètre extérieur est important, et plus valeur de l'angle d'arrêt α sera faible, et inversement.

De préférence, l'utilisateur de la manette a à sa disposition, pour chaque organe de commande pivotant 3, plusieurs bagues de réglage amovibles, telles que par exemple les bagues de réglage cylindriques 5A, 5B, 5C respectivement des figures 6A, 6B, 6C. Ces bagues de réglage cylindriques 5A, 5B, 5C des figures 6A, 6B, 6C possèdent la même section intérieure, et notamment les mêmes diamètres intérieurs Dᵢₙ, mais ont des épaisseurs E différentes, et de ce fait possèdent des diamètres extérieurs Dₒᵤₜ différents. Ces bagues de réglage cylindriques 5A, 5B, 5C ont de préférence la même hauteur H.

La bague 5A la plus fine permet d'obtenir la valeur d'angle d'arrêt α le plus important et permet par exemple un angle d'arrêt de 46°. La bague de réglage 5C la plus épaisse permet d'obtenir la valeur d'angle d'arrêt α le plus faible et permet par exemple un angle d'arrêt de 30°. La bague 5B d'épaisseur intermédiaire permet d'obtenir une valeur d'angle d'arrêt α intermédiaire et par exemple un angle d'arrêt α de 38°.

Plus la valeur de l'angle d'arrêt α est faible et plus la réactivité de de l'organe de commande 3 pivotant de la manette de jeu est importante et inversement.

Grâce aux bagues de réglage 5A, 5B, 5C l'utilisateur de la manette peut avantageusement régler très facilement et très rapidement la réactivité d'un organe de commande pivotant 3 de sa manette de jeu 1, notamment pour rendre cette réactivité plus adaptée au type de jeu auquel il souhaite jouer. Il lui suffit de retirer à la main la tête amovible 32 de l'organe de commande pivotant 3, de retirer le cas échéant la bague de réglage présente sur l'organe de commande 3, d'enfiler sur l'élément de protection 31 la nouvelle bague de réglage 5A, 5B ou 5C correspondant à la réactivité souhaitée par l'utilisateur pour l'organe de commande pivotant 3, et de remettre en place la tête amovible 32, toutes ces opérations étant avantageusement réalisées facilement par l'utilisateur sans devoir désassembler la coque 2 assemblée de la manette de jeu 1.

Ainsi, lorsque l'utilisateur de la manette de jeu souhaite avoir une manette plus réactive, par exemple pour jouer à un jeu de combat, il peut choisir d'équiper chaque organe de commande pivotant 3 de sa manette de jeu 1 avec la bague de réglage 5C permettant d'obtenir l'angle d'arrêt α le plus faible. Lorsque l'utilisateur de la manette de jeu souhaite avoir une manette moins réactive, il peut choisir d'équiper chaque organe de commande pivotant 3 de sa manette de jeu 1 avec la bague de réglage 5B ou 5A permettant d'obtenir des valeurs d'angle d'arrêt α plus importantes.

### Autres variantes de réalisation (liste non exhaustive)

L'invention n'est pas limitée à la variante particulière de réalisation des figures annexées.

En particulier, et de manière non exhaustive, l'invention n'est pas limitée à la structure particulière et aux dimensions particulières des sous-éléments 321 et 322 formant la tête 32 et illustrés sur les figures annexées.

L'invention n'est pas limitée à la mise en œuvre d'une tête 32 en deux parties 321 et 322 assemblées, mais dans une autre variante la tête 32 peut comporter plus de deux parties assemblées ou pourrait être faite d'une seule pièce, par exemple une pièce injectée en plastique.

La tête 32 n'est pas nécessairement spécifiquement adaptée pour être manipulée au moyen d'un pouce de la main, l'invention s'étendant plus généralement à tout organe de commande 3 pivotant manipulable manuellement, quels que soient notamment la structure, la géométrie, les dimensions et les matériaux constitutifs de la tête 32 de l'organe de commande 3. Par exemple, l'organe de commande 3 peut être un « stick » pivotant de type joystick préhensible avec deux doigts d'une main ou avec toute la main.

Les moyens d'assemblage de la tête 32 amovible peuvent être différents de ceux qui ont été précédemment décrits, la tête amovible pouvant par exemple être vissée ou assemblée au moyen d'aimants ou équivalent.

Dans une autre variante, l'embout d'assemblage cylindrique 311 de l'élément de protection 31 (ou d'un autre élément de l'organe de commande 3) pourrait être adapté de manière à être emboîté à l'intérieur d'une partie inférieure 3211 tubulaire de la tête 32 amovible, la bague de réglage étant ce cas prévue pour être enfilée sur cette partie inférieure 3211 tubulaire de la tête 32.

Dans une autre variante la tête 32 n'est pas nécessairement amovible. Dans ce cas, la bague de réglage de l'angle d'arrêt peut par exemple être en deux parties séparées et assemblables entre elles de manière à permettre un montage de la bague de réglage sur l'organe de commande pivotant sans désassembler la coque 2 et sans démonter la tête 32 de l'organe de commande pivotant. Par exemple, la bague de réglage peut être constituée de deux demi cylindres qui peuvent être assemblés sur l'organe de commande par aimantation magnétique pour constituer la bague de réglage ; les deux demi cylindres peuvent être aimantés ou l'organe de commande pivotant 3 peut être aimanté et les deux demi cylindres peuvent être dans un matériau ferromagnétique et par exemple en métal. Les deux demi cylindres peuvent également être assemblés entre eux par, tout autre moyen, de manière à pouvoir être séparés l'un de l'autre, par exemple par vissage, clipsage ou emboîtement.

L'élément de protection 31 de la variante des figures annexées est optionnel et pourrait être supprimé. Dans ce cas, la tête 32 de l'organe de de commande pivotant est conçue pour être adaptée directement sur la l'arbre pivotant 300 de l'élément de base 30, sans pièce intermédiaire 31.

Dans l'invention, l'élément de réglage amovible 5A, 5B, 5C présente de préférence une face extérieure 50 formant un cylindre droit de section transversale circulaire.

Dans une autre variante, la section transversale de cette face extérieure 50 peut ne pas être circulaire, et peut par exemple être de type polygonal ou elliptique.

L'invention n'est pas limitée à la mise en œuvre de bagues de réglage 5A, 5B, 5C dont la section intérieure est circulaire. La géométrie des sections intérieures des bagues de réglage 5A, 5B, 5C est sans importance pour l'invention, cette section intérieure pouvant par exemple être polygonale (triangulaire, carrée, rectangulaire, hexagonale,..)

Dans une autre variante de réalisation, les éléments de réglage peuvent être constitués par des bagues de réglage cylindriques amovibles, qui sont adaptées de manière à pouvoir être enfilées coaxialement l'une sur l'autre, de manière à obtenir un élément de réglage amovible dont le diamètre externe dépend du nombre de bagues coaxiales. Plus le nombre de bagues de réglage montées coaxialement les unes par rapport aux autres sur l'organe de commande pivotant est important, plus la valeur de l'angle d'arrêt α de l'organe de commande pivotant est faible et inversement.

## Revendications

1. Ensemble comportant une manette de jeu (1) et au moins deux éléments de réglage différents (5A/5B ; 5B/5C ; 5A/5C), ladite manette de jeu comportant une coque (2) assemblée et des moyens de commande comportant au moins un organe de commande (3), qui est passé à travers la coque (2) assemblée, qui comporte à l'extérieur de la coque (2) assemblée une tête (32) pour la manipulation de l'organe de commande (3), qui est pivotant et est apte à être incliné manuellement dans toutes les directions depuis une position de repos dans laquelle il est rappelé élastiquement en rotation, chaque élément de réglage (5A ; 5B ; 5C) étant apte à être monté de manière amovible sur l'organe de commande (3) et à être retiré de l'organe de commande (3) sans désassembler la coque (2) de la manette de jeu (1) de manière à régler l'angle d'arrêt (α) de l'organe de commande (3), l'angle d'arrêt (α) étant l'angle d'inclinaison, par rapport à sa position de repos de l'organe de commande pivotant (3) incliné en position d'arrêt, et l'organe de commande (3) pourvu dudit élément de réglage amovible (5A ; 5B ; 5C) étant apte à être incliné manuellement pour chaque direction d'inclinaison jusqu'à une position d'arrêt, dans laquelle l'élément de réglage (5A ; 5B ; 5C) est en butée et permet de bloquer l'inclinaison de l'organe de commande (3) et les éléments de réglage permettant ledit blocage de l'inclinaison de l'organe (3) en position d'arrêt avec respectivement des valeurs d'angle d'arrêt (α) différentes pour chaque direction d'inclinaison identique.

2. Ensemble selon la revendication 1, dans lequel la tête (32) de l'organe de commande (3) est amovible et dans lequel chaque élément de réglage (5A ; 5B ; 5C) est apte à être monté de manière amovible sur l'organe de commande (3) lorsque la tête (32) est retirée.

3. Ensemble selon la revendication 2, dans lequel chaque élément de réglage (5A ; 5B ; 5C) est une bague, qui est apte à être enfilée de manière amovible sur une partie (311) de l'organe de commande (3) lorsque la tête (32) est retirée.

4. Ensembleselon l'une quelconque des revendications 1 à 3, dans lequel l'organe de commande (3) comporte un embout d'assemblage (311) ayant une cavité (311a) ouverte en partie supérieure, dans laquelle une partie (3211) de la tête (32) amovible est apte à être insérée dans ladite cavité (311a), et dans laquelle ledit élément de réglage (5A ; 5B ; 5C) est apte à être monté de manière amovible, et de préférence à être enfilé de manière amovible sur l'embout d'assemblage (311) lorsque la tête (32) est retirée.

5. Ensemble selon l'une quelconque des revendications 2 à 4, dans lequel ledit élément de réglage (5A ; 5B ; 5C) est apte à être monté, de manière amovible sur l'organe de commande (3) en étant bloqué axialement entre la tête (32) de l'organe de commande (3) et une autre partie (310a) de l'organe de commande (3).

6. Ensemble selon l'une quelconque des revendications 1 à 5, dans lequel la valeur de l'angle d'arrêt (α), qui est l'angle d'inclinaison, par rapport à sa position de repos, de l'organe de commande (3) pourvu dudit élément de réglage (5A ; 5B ; 5C) et incliné en position d'arrêt, est identique pour toutes les directions d'inclinaison de l'organe de commande (3).

7. Ensemble selon l'une quelconque des revendications 1 à 6, dans lequel la valeur de l'angle d'arrêt (α), qui est l'angle d'inclinaison, par rapport à sa position de repos, de l'organe de commande (3) pourvu dudit élément de réglage (5A ; 5B ; 5C) et incliné en position d'arrêt, est inférieure à 90° et de préférence comprise entre 20° et 70°.

8. Ensemble selon l'une quelconque des revendications 1 à 7, comportant au moins un troisième éléments de réglage différent (5A ; 5B ; 5C), qui permet ledit blocage de l'inclinaison de l'organe (3) en position d'arrêt avec respectivement des valeurs d'angle d'arrêt (α) différentes de celles obtenues avec lesdits au moins deux autres éléments de réglage pour chaque direction d'inclinaison identique.

9. Ensemble selon l'une quelconque des revendications 1 à 8, dans lequel la manette de jeu comporte un bord intérieur (40a), qui entoure l'organe de commande (3) et qui délimite dans la coque assemblée (2) une ouverture (40b) à travers laquelle est positionné l'organe de commande (3), et dans lequel ledit bord intérieur (40a) fait office de butée basse en rotation lorsque l'organe de commande (3) pourvu dudit l'élément de réglage (5A ; 5B ; 5C) est incliné en position d'arrêt.

10. Ensemble selon l'une quelconque des revendications 1 à 9, dans lequel la manette de jeu comporte un bord intérieur (40a), qui entoure l'organe de commande (3) et qui délimite dans la coque assemblée (2) une ouverture (40b) à travers laquelle est positionné l'organe de commande (3), et dans lequel l'élément de réglage (5A ; 5B ; 5C), une fois monté sur l'organe de commande (3), est positionné à travers ladite ouverture (40b), une partie de l'élément de réglage (5A ; 5B ; 5C) étant logée à l'intérieur de la coque (2) et une autre partie de l'élément de réglage (5A ; 5B ; 5C) étant positionnée à l'extérieur de la coque (2).

11. Ensemble selon l'une quelconque des revendications 1 à 10, dans lequel chaque élément de réglage est une bague de réglage cylindrique (5A ; 5B ; 5C).

12. Ensemble selon la revendication 11, dans lequel la face externe (50) de chaque bague de réglage cylindrique (5A ; 5B ; 5C) forme un cylindre droit à section transversale circulaire sur au moins une partie de la hauteur (H) de la bague de réglage.

13. Ensemble selon l'une quelconque des revendications 1 à 12, dans lequel les éléments de réglage différents sont constitués respectivement par des bagues de réglage, dont la face externe (50) forme un cylindre droit à section transversale circulaire sur au moins une partie de la hauteur (H) de la bague de réglage, et dans laquelle les diamètres extérieurs (Dₒᵤₜ) desdites parties cylindriques à section transversale circulaire des faces externes (50) des bagues de réglage sont différents.

14. Ensemble selon la revendication 13, dans laquelle les bagues de réglage ont la même section transversale intérieure, et notamment le même diamètre intérieur (Dᵢₙ), et de préférence dans laquelle les bagues de réglage ont la même hauteur (H).

15. Ensemble selon l'une quelconque des revendications 1 à 14, dans laquelle une partie (30) de l'organe de commande pivotant (3) est logée et est fixée à l'intérieur de la coque (2) assemblée, et la manette de jeu comporte des capteurs positionnés à l'intérieur de la coque (2) assemblée et mesurant la rotation de l'organe de commande (3) pivotant.

16. Procédé de réglage de l'angle d'arrêt (α) de l'organe de commande (3) pivotant d'une manette de jeu (1) d'un ensemble de l'une quelconque des revendications 1 à 15, ledit procédé de réglage comprenant le montage de l'un des éléments de réglage (5A ; 5B ; 5C) amovible sur l'organe de commande (3), sans désassembler la coque (2) de la manette de jeu (1) de telle sorte que l'organe de commande (3) pourvu de cet élément de réglage amovible (5A ; 5B ; 5C) est apte à être incliné manuellement pour chaque direction d'inclinaison jusqu'à une position d'arrêt, dans laquelle cet élément de réglage (5A ; 5B ; 5C) est en butée et permet de bloquer l'inclinaison de l'organe de commande (3).

17. Procédé selon la revendication 16, dans lequel l'organe de commande (3) comportant une tête (32) amovible, pour effectuer le montage de l'élément de réglage (5A ; 5B ; 5C), on retire préalablement la tête (32) amovible de l'organe de commande (3), et une fois l'élément de réglage (5A ; 5B ; 5C) monté, on remet en place la tête (32) amovible de l'organe de commande (3).

## Patentansprüche

1. Anordnung, umfassend einen Spiele-Controller (1) und mindestens zwei unterschiedliche Einstellelemente (5A/5B; 5B/5C; 5A/5C), wobei der Spiele-Controller ein zusammengesetztes Gehäuse (2) und Steuerungsmittel umfasst, die mindestens ein Steuerelement (3) aufweisen, welches durch das zusammengesetzte Gehäuse (2) geführt ist, welches außerhalb des zusammengesetzten Gehäuses (2) einen Kopf (32) zur Betätigung des Steuerelements (3) aufweist, welches schwenkbar ist und welches aus einer Ruhestellung, in die es durch Rotation elastisch zurückgestellt wird, manuell in alle Richtungen neigbar ist,
wobei jedes Einstellelement (5A; 5B; 5C) lösbar an dem Steuerelement (3) montiert ist und von dem Steuerelement (3) abgezogen werden kann, ohne das Gehäuse (2) des Spiele-Controllers (1) zu zerlegen (1), wobei der Anschlagwinkel (α) des Steuerelements (3) eingestellt wird und es sich bei dem Anschlagwinkel (α) um den Neigungswinkel des geneigten schwenkbaren Steuerelements (3) in Bezug auf dessen Ruhestellung ist, und
das mit dem lösbaren Einstellelement (5A; 5B; 5C) ausgestattete Steuerelement (3) manuell in jede Neigungsrichtung geneigt werden kann bis zu einer Endposition, in der das Einstellelement (5A; 5B; 5C) anliegt und die Neigung des Steuerelements (3) blockiert, wobei die Einstellelemente das Blockieren der Neigung des Elements (3) in der Anschlagstellung mit jeweils unterschiedlichen Anschlagwinkelwerten (α) für jede identische Neigungsrichtung erlauben.

2. Anordnung nach Anspruch 1, wobei der Kopf (32) des Steuerelements (3) ablösbar ist und jedes Einstellelement (5A; 5B; 5C) ablösbar an dem Steuerelement (3) montierbar ist, wenn der Kopf (32) abgezogen ist.

3. Anordnung nach Anspruch 2, wobei jedes Einstellelement (5A; 5B; 5C) ein Ring ist, der bei abgezogenem Kopf (32) lösbar auf einen Teil (311) des Steuerelements (3) aufsteckbar ist.

4. Anordnung nach einem der Ansprüche 1 bis 3, wobei das Steuerelement (3) ein Verbindungsstück (311) umfasst, welches einen im oberen Abschnitt offenen Hohlraum (311a) aufweist, wobei ein Teil (3211) des ablösbaren Kopfes (32) in den Hohlraum (311a) einführbar ist, und wobei das Einstellelement (5A; 5B; 5C) lösbar montierbar ist und bevorzugt lösbar auf das Verbindungsstück (311) aufgesteckt werden kann, wenn der Kopf (32) abgezogen ist.

5. Anordnung nach einem der Ansprüche 2 bis 4, wobei das Einstellelement (5A; 5B; 5C) lösbar an dem Steuerelement (3) montierbar ist, wobei es axial zwischen dem Kopf (32) des Steuerelements (3) und einem anderen Teil (310a) des Steuerelements (3) blockiert ist/wird.

6. Anordnung nach einem der Ansprüche 1 bis 5, wobei der Wert des Anschlagwinkels (α), wobei es sich um den Neigungswinkel des mit dem Einstellelement (5A; 5B; 5C) ausgestatteten und in die Anschlagstellung geneigten Steuerelements (3) gegenüber seiner Ruhestellung handelt, für alle Neigungsrichtungen des Steuerelements (3) gleich ist.

7. Anordnung nach einem der Ansprüche 1 bis 6, wobei der Wert des Anschlagwinkels (α), wobei es sich um den Neigungswinkel des mit dem Einstellelement (5A; 5B; 5C) ausgestatteten und in die Anschlagstellung geneigten Steuerelements (3) gegenüber seiner Ruhestellung handelt, kleiner als 90° und bevorzugt zwischen 20° und 70° ist.

8. Anordnung nach einem der Ansprüche 1 bis 7, mit mindestens einem dritten, unterschiedlichen Einstellelement (5A; 5B; 5C), das ein Blockieren der Neigung des Elements (3) in der Anschlagposition mit jeweils Anschlagwinkelwerten (α) erlaubt, die sich von denen unterscheiden, die mit den mindestens zwei anderen Einstellelementen für jede identische Neigungsrichtung erhalten werden.

9. Anordnung nach einem der Ansprüche 1 bis 8, wobei der Spiele-Controller einen inneren Rand (40a) aufweist, der das Steuerelement (3) umgibt und in dem zusammengesetzten Gehäuse (2) eine Öffnung (40b) begrenzt, durch die das Steuerelement (3) positioniert ist, und wobei der innere Rand (40a) als unterer Rotationsanschlag dient, wenn das mit dem Einstellelement (5A; 5B; 5C) ausgestattete Steuerelement (3) in die Anschlagposition geneigt ist/wird.

10. Anordnung nach einem der Ansprüche 1 bis 9, wobei der Spiele-Controller einen inneren Rand (40a) aufweist, der das Steuerelement (3) umgibt und in dem zusammengesetzten Gehäuse (2) eine Öffnung (40b) begrenzt, durch die das Steuerelement (3) positioniert ist, und wobei das Einstellelement (5A; 5B; 5C) nach dessen Montage auf dem Steuerelement (3) durch die Öffnung (40b) hindurch positioniert ist, wobei sich ein Teil des Einstellelements (5A; 5B; 5C) innerhalb des Gehäuses (2) befindet und sich ein anderer Teil des Einstellelements (5A; 5B; 5C) außerhalb des Gehäuses (2) befindet.

11. Anordnung nach einem der Ansprüche 1 bis 10, wobei jedes Einstellelement ein zylindrischer Einstellring ist (5A; 5B; 5C) ist.

12. Anordnung nach Anspruch 11, wobei die Außenfläche (50) jedes zylindrischen Einstellrings (5A; 5B; 5C) über mindestens einen Teil der Höhe (H) des Einstellrings einen geraden Zylinder mit kreisförmigem Querschnitt bildet.

13. Anordnung nach einem der Ansprüche 1 bis 12, wobei die verschiedenen Einstellelemente jeweils durch Einstellringe gebildet sind, deren Außenfläche (50) über mindestens einen Teil der Höhe (H) des Einstellrings einen geraden Zylinder mit kreisförmigem Querschnitt bildet, und wobei die Außendurchmesser (Dₒᵤₜ) der Zylinder mit kreisförmigem Querschnitt der Außenflächen (50) der Einstellringe unterschiedlich sind.

14. Anordnung nach Anspruch 13, wobei die Einstellringe den gleichen Innenquerschnitt, insbesondere den gleichen Innendurchmesser (Dᵢₙ), aufweisen, und wobei bevorzugt die Einstellringe die gleiche Höhe (H) aufweisen.

15. Anordnung nach einem der Ansprüche 1 bis 14, wobei ein Teil (30) des schwenkbaren Steuerelements (3) innerhalb des zusammengesetzten Gehäuses (2) aufgenommen und befestigt ist und der Spiele-Controller Sensoren aufweist, die sich innerhalb des zusammengesetzten Gehäuses (2) befinden und die Drehung des schwenkbaren Steuerelements (3) messen.

16. Verfahren zum Einstellen des Anschlagwinkels (α) des schwenkbaren Steuerelements (3) eines Spiele-Controllers (1) einer Anordnung nach einem der Ansprüche 1 bis 15, wobei das Einstellverfahren das Montieren eines der Einstellelemente (5A; 5B; 5C) ablösbar an dem Steuerelement (3) umfasst, ohne das Gehäuse (2) des Spiele-Controllers (1) auseinanderzunehmen, derart, dass das mit dem ablösbaren Einstellelement (5A; 5B; 5C) ausgestattete Steuerelement (3) manuell in jede Neigungsrichtung bis zu einer Anschlagstellung geneigt werden kann, in der das Einstellelement (5A; 5B; 5C) anliegt und die Neigung des Steuerelements (3) blockiert.

17. Verfahren nach Anspruch 16, wobei bei dem einen ablösbaren Kopf (32) aufweisenden Steuerelement (3) zur Montage des Einstellelements (5A; 5B, 5C) zunächst der abnehmbare Kopf (32) von dem Steuerelement (3) entfernt wird, und nach der Montage des Einstellelements (5A; 5B; 5C) der abnehmbare Kopf (32) wieder auf das Steuerelement (3) gesetzt wird.

## Claims

1. Assembly comprising a game controller (1) and at least two different adjusting elements (5A/5B; 5B/5C; 5A/5C), said game controller comprising an assembled shell (2) and control means comprising at least one control member (3), which is passed through the assembled shell (2), which comprises, on the outside of the assembled shell (2), a head (32) for manipulating the control member (3), which is pivotable and can be tilted manually in all directions from a rest position into which it returns in a rotationally elastic manner, each adjusting element (5A; 5B; 5C) being able to be removably mounted on the control member (3) and to be removed from the control member (3) without disassembling the shell (2) of the game controller (1), so as to adjust the stop angle (α) of the control member (3), the stop angle (α) being the tilt angle, relative to its rest position, of the pivoting control member (3) tilted in the stop position and the control member (3) provided with said removable adjusting element (5A; 5B; 5C) being able to be tilted manually for each tilt direction until it reaches a stop position in which the adjusting element (5A; 5B; 5C) abuts and allows the control member tilt to be blocked (3) and the adjustment elements enabling the said locking of the member (3) tilt in the stop position with respectively different stop angle values (α) for each identical tilt direction.

2. Assembly according to claim 1, wherein the head (32) of the control member (3) is removable and wherein each adjusting element (5A; 5B; 5C) is able to be removably mounted on the control member (3) when the head (32) is removed.

3. Assembly according to claim 2, wherein each adjusting element (5A; 5B; 5C) is a ring, which is able to be slipped in a removable manner on a part (311) of the control member (3) when the head (32) is removed.

4. Assembly according to one of claims 1 to 3, wherein the control member (3) comprises an assembly end piece (311) having an open cavity (311a) in the upper part, wherein a part (3211) of the removable head (32) can be inserted into said cavity (311a), and wherein said adjusting element (5A; 5B; 5C) can be removably mounted, and preferably removably slipped onto the assembly end piece (311) when the head (32) is removed.

5. Assembly according to one of claims 2 to 4, wherein said adjusting element (5A; 5B; 5C) is able to be removably mounted on the control member (3) by being axially blocked between the head (32) of the control member (3) and another part (310a) of the control member (3).

6. Assembly according to one of claims 1 to 5, wherein the value of the stop angle (α), which is the tilt angle, with respect to its rest position, of the control member (3) provided with said adjusting element (5A; 5B; 5C) and tilted in the stop position, is identical for all tilt directions of the control member (3).

7. Assembly according to one of claims 1 to 6, wherein the value of the stop angle (α), which is the tilt angle, with respect to its rest position, of the control member (3) provided with said adjusting element (5A; 5B; 5C) and tilted in the stop position, is less than 90° and preferably between 20° and 70°.

8. Assembly according to one of claims 1 to 7, comprising at least a third different adjusting element (5A; 5B; 5C), which allows said blocking of the tilt of the member (3) in the stop position with different respective stop angle values (α) of those obtained with the said at least two other control elements for each identical tilt direction.

9. Assembly according to one of claims 1 to 8, in which the game controller comprises an inner edge (40a), which surrounds the control member (3) and which delimits an opening (40b) in the assembled shell (2) through which the control member (3) is positioned, and wherein said inner edge (40a) acts as a bottom rotational stop when the control member (3) provided with said adjusting element (5A; 5B; 5C) is tilted in the stop position.

10. Assembly according to one of claims 1 to 9, in which the game controller comprises can inner edge (40a), which surrounds the control member (3) and which delimits an opening (40b) in the assembled shell (2) through which the control member (3) is positioned, and wherein the adjusting element (5A; 5B; 5C), when mounted on the control member (3), is positioned through said opening (40b), one part of the adjusting element (5A; 5B; 5C) being housed inside the shell (2) and another part of the adjusting element (5A; 5B; 5C) being positioned outside the shell (2).

11. Assembly according to one of claims 1 to 10, wherein each adjusting element is a cylindrical adjusting ring (5A; 5B; 5C).

12. Assembly according to claim 11, wherein the outer face (50) of each cylindrical adjusting ring (5A; 5B; 5C) forms a straight cylinder with a circular cross-section over at least part of the height (H) of the adjusting ring.

13. Assembly according to one of claims 1 to 12, wherein the different adjusting elements, are constituted respectively by adjusting rings, the outer face (50) of which forms a straight cylinder with a circular cross-section over at least part of the height (H) of the adjusting ring, and the outer diameters (Dₒᵤₜ) of said cylindrical parts with a circular cross-section of the outer faces (50) of the adjusting rings are different.

14. Assembly according to claim 13, wherein the adjusting rings have the same internal cross-section, and in particular the same internal diameter (Dᵢₙ), and preferably in which the adjusting rings have the same height (H).

15. Assembly according to one of claims 1 to 14, wherein part (30) of the pivoting control member (3) is housed and is fastened inside the assembled shell (2), and the game controller comprises sensors positioned inside the assembled shell (2) and measuring the rotation of the pivoting control member (3).

16. A method of adjusting the stop angle (α) of the pivoting control member (3) of a game controller (1) of an assembly of any one of claims 1 to 15, said adjustment method comprising mounting one of one of the removable adjustment elements (5A; 5B ; 5C) on the control member (3), without disassembling the shell (2) of the game controller (1) so that the control member (3) provided with this other removable adjustment element (5A; 5B; 5C) is able of being manually tilted for each tilt direction to a stop position, in which this adjustment element (5A; 5B; 5C) is in abutment and makes it possible to block the control member (3) tilt.

17. Method according to claim 16, in which the control member (3) comprises a removable head (32), in order to mount the adjustment element (5A; 5B; 5C), the removable head (32) is first removed from the control member (3), and once the adjustment element (5A; 5B; 5C) has been mounted, the removable head (32) is replaced on the control member (3).
